# EUROPÄISCHE PATENTSCHRIFT

(11) **EP 0 629 965 B1**
(45) Veröffentlichungstag und Bekanntmachung des Hinweises auf die Patenterteilung: **30.08.2000**
(21) Anmeldenummer: 94108153.1
(22) Anmeldetag: 26.05.1994
(51) Int. Cl.: G06F 17/40

(54) **Verfahren zur Erfassung von Daten aus elektronischen Steuergeräten**
System for data acquisition from electronic control apparatuses
Système d'acquisition de données provenant d'appareils de contrôle électroniques

(30) Priorität: 15.06.1993 DE 4319770
(43) Veröffentlichungstag der Anmeldung: 21.12.1994
(73) Patentinhaber: ROBERT BOSCH GMBH, 70442 Stuttgart (DE)
(72) Erfinder: Kettenacker, Walter, Dipl.-Ing., D-71711 Steinheim (DE); Sorg, Joachim, Dipl.-Ing., D-71263 Weil Der Stadt (DE); Mischker, Karsten, D-71229 Leonberg (DE); Jeutter, Roland, Dipl.-Ing., D-71229 Leonberg (DE); Hoffmann, Frank, Dipl.-Ing., D-70806 Kornwestheim (DE)

(56) Entgegenhaltungen:
- GB-A- 2 100 895
- US-A- 4 280 060
- PATENT ABSTRACTS OF JAPAN vol. 14, no. 517 (M-1047) 13. November 1990 & JP-A-02 215 952 (HITACHI LTD) 28. August 1990
- PATENT ABSTRACTS OF JAPAN vol. 15, no. 447 (M-1179) 14. November 1991 & JP-A-03 189 337 (JAPAN ELECTRON CONTROL SYST CO LTD) 19. August 1991

## Beschreibung

Die Erfindung betrifft ein Verfahren zum Erfassen von Daten aus elektronischen Steuergeräten, die insbesondere in Kraftfahrzeugen eingesetzt werden.

### Stand der Technik

Es ist bekannt, in Kraftfahrzeugen sogenannte elektronische Steuergeräte einzusetzen, die verschiedene Betriebszustände der Antriebsmaschine des Kraftfahrzeugs erfassen. Die Steuergeräte sind dabei über Leitungen mit Sensoren und/oder Inkrementalgebern verbunden und erhalten von diesen die entsprechenden Signale. Diese Signale werden in dem Steuergerät gespeichert und sind über eine externe Schnittstelle, beispielsweise zur Diagnose und zur Kontrolle bestimmter Einstellungen, abrufbar. Das Steuergerät fragt dazu beispielsweise im Zeitmultiplexverfahren die verschiedenen Signalgeber ab und speichert die erhaltenen Informationen ab. Somit ist zu jedem Zeitpunkt ein genauer Überblick über die gesamte Systemeinstellung erhältlich. Die Signalinformationen werden dabei von dem Steuergerät in unterschiedlichen Programmebenen, beispielsweise zündungssynchron oder zeitsynchron oder asynchron Weiterverarbeitet. Es ist bisher lediglich möglich, von diesen im Steuergerät anliegenden Datenmengen nur kleine Teilmengen, bis zu 10 Bytes, aus ausschließlich einer Programmebene, das heißt entweder zündungssynchron oder zeitsynchron oder asynchron, zu erfassen. Diese Erfassung ist mit einer starken Beeinflussung der Steuergeräte-Programmlaufzeit durch spezielle Datenaufbereitungsprogramme für die Abfrage im Steuergerät verbunden. Somit ist nachteilig, daß beispielsweise bei einer Diagnose die von dem Steuergerät abgefragten Dateninhalte nicht die konkrete Betriebssituation wiedergeben, da durch die Beeinflussung der Programmlaufzeit und durch die geringe Anzahl gleichzeitig abfragbarer Daten nur ein ungenauer Bezug zur aktuellen Situation möglich ist.

Aus der US 42 80 060 und der GB 21 00 895 ist es bekannt, zum Zweck des Datenaustausches zwischen verschiedenen elektronischen Geräten einen Dual-Port-RAM vorzusehen

Das erfindungsgemäße Verfahren mit den im Hauptanspruch genannten Merkmalen hat demgegenüber den Vorteil, daß Datenmengen aus dem Steuergerät heraus erfaßt werden können, ohne daß eine Beeinflussung der Steuergeräte-Programmlaufzeit erfolgt. Es ist vorgesehen, daß die Daten simultan erfaßt und über eine parallele Schnittstelle einem Meßsystem übertragen werden. Hiermit wird vorteilhaft erreicht, daß die gesamten Datenmengen, die in dem Steuergerät zu einem bestimmten Zeitpunkt zur Verfügung stehen, simultan in ein Meßsystem übertragen werden, das heißt gedoppelt werden, so daß die weitere Auswertung, beispielsweise Diagnose, der Signale von dem Meßsystem aus vorgenommen werden kann, ohne daß die Steuergeräte-Programmlaufzeit in irgendeiner Weise beeinflußt wird.

Weiterhin ist vorgesehen, daß gleichzeitig Daten verschiedener asynchroner Programmebenen erfaßt werden und diese dem Meßsystem übertragen werden. Hierdurch wird erreicht, daß die in dem Steuergerät anliegenden Signale keiner Zwischensynchronisation unterzogen werden müssen, und damit eventuelle Fehlerquellen ausgeschlossen werden können.

Weiterhin ist vorgesehen, daß die Daten zu einem parallel zu einem Arbeitsspeicher des Steuergerätes liegenden Dual-Port-RAM des Meßsystems übertragen werden. Hierdurch ist sehr vorteilhaft erreicht, daß alle im Arbeitsspeicher des Steuergerätes anliegenden Daten gleichzeitig auch im Meßsystem zur Verfügung stehen.

Weiterhin ist vorgesehen, daß in den verschiedenen Programmebenen von dem Steuergerät Triggerinformationen bereitgestellt werden, die besonders bevorzugt von dem Meßsystem fortlaufend abgefragt und vorzugsweise zyklisch erfaßt werden. Hierdurch wird sehr vorteilhaft erreicht, daß von dem Meßsystem synchron zu Steuergeräte-Abläufen in sich konsistente Datenmengen erfaßt werden können, die in dem Meßsystem mit den verschiedenen Programmebenen selbsttätig synchronisiert werden und je nach gewünschter Systemabfrage erfaßt werden können.

Weitere bevorzugte Ausgestaltungen des Verfahrens ergeben sich aus den in den übrigen Unteransprüchen genannten Merkmalen.

### Zeichnungen

Die Erfindung wird nachfolgend in einem Ausführungsbeispiel anhand der zugehörigen Figuren näher erläutert. Es zeigen:
- Figur 1: ein Blockschaltbild einer mit einem Meßsystem verbundenen Steuergeräteanordnung und
- Figur 2: in einem Blockschaltbild den Datenübergang zwischen einem Steuergerät und einem Meßsystem.

### Beschreibung des Ausführungsbeispiels

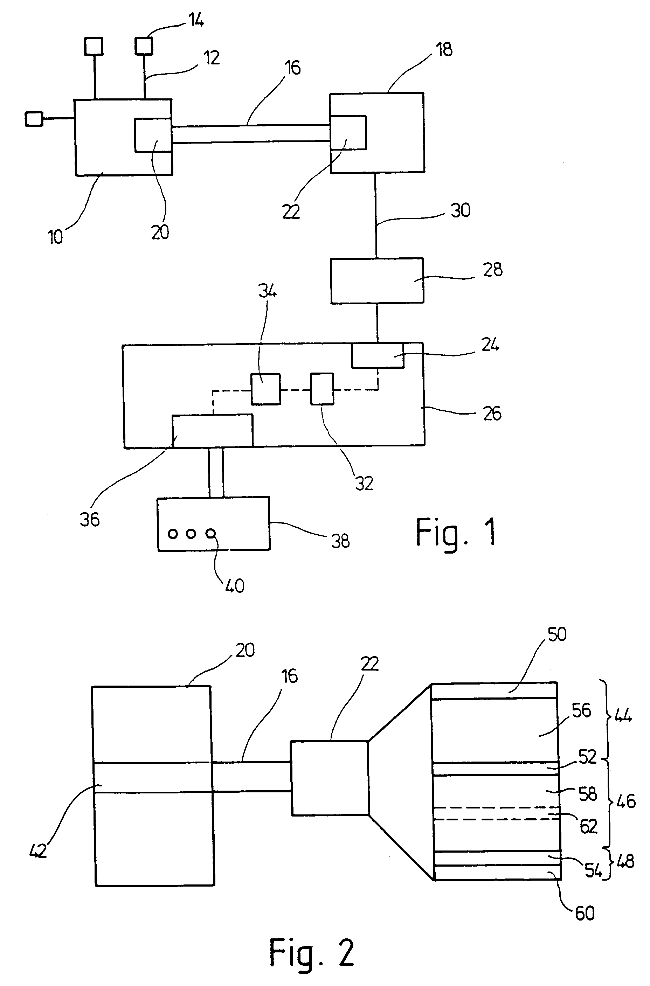

Figur 1 zeigt ein Steuergerät 10, das über verschiedene Signalleitungen 12 mit Signalgebern 14 verbunden ist. Die Signalgeber 14 können dabei verschiedene Sensoren und/oder Inkrementalgeber sein, die bestimmte Betriebszustände eines Kraftfahrzeugs, beispielsweise Zündzeitpunkt, Kurbelwellenwinkel und ähnliches, messen und den derzeitigen Zustand an das Steuergerät 10 melden. Das Steuergerät 10 ist weiterhin über eine parallele Schnittstelle 16 mit einem Meßsystem 18 verbunden. Das Steuergerät 10 weist dabei einen Arbeitsspeicher 20 auf, der über die parallele Schnittstelle 16 zu einem in dem Meßsystem 18 vorgesehenen Dual-Port-RAM 22 parallel liegt. Das Meßsystem 18 ist mit einer seriellen Schnittstelle 24 eines Steuerrechners 26 verbunden. Die Verbindung zwischen dem Meßsystem 18 und dem Steuerrechner 26 erfolgt unter Zwischenschaltung eines Adapters 28, wobei die Übertragungsstrecke 30 beispielsweise als ein Lichtleiter ausgebildet sein kann. Der Steuerrechner 26 weist wenigstens einen Ringpuffer 32 und eine Festplatte 34 auf. Der Steuerrechner 26 besitzt weiterhin eine parallele Ausgangsschnittstelle 36, die mit einer Anzeigeeinheit 38 verbindbar ist. Die Anzeigeeinheit 38 besitzt hier drei Funktionen 40.

Das anhand des Blockschaltbildes in Figur 1 verdeutlichte erfindungsgemäße Verfahren läuft folgendermaßen ab:

Das Steuergerät 10 fragt über die Signalleitungen 12 die Signalgeber 14 ab und speichert diese Signale ab. Diese Abfrage erfolgt beispielsweise in einer bestimmten zeitlichen Reihenfolge in einem Zeitmultiplexverfahren. Somit ist gewährleistet, daß die in dem Steuergerät 10 abgespeicherten Daten in einer bestimmten von der Programmlaufzeit des Steuergerätes abhängigen Taktfrequenz jeweils aktualisiert werden. Die gerade aktuellen Signaldaten werden in verschiedenen Programmebenen zum Beispiel zündsynchron oder zeitsynchron weiterverarbeitet und ebenfalls in dem Arbeitsspeicher 20 abgelegt. Die im Arbeitsspeicher 20 abgespeicherte Datenmenge liegt gleichzeitig über die parallele Schnittstelle 16 in dem Dual-Port-RAM 22 des Meßsystems 18 an. Somit wird im Prinzip eine identische Kopie des Dateninhalts des Arbeitsspeichers 20 angefertigt, ohne daß für eine bestimmmte Signalauswahl auf den Programmablauf innerhalb des Steuergerätes 10 zurückgegriffen werden muß. Gleichzeitig mit dem Datenaustausch zwischen dem Dual-Port-RAM 22 und dem Arbeitsspeicher 20 werden von dem Steuergerät 10 spezielle Triggerinformationen bereitgestellt, die es ermöglichen, daß in dem Dual-Port-RAM 22 der Programmablauf innerhalb des Steuergerätes 10 nachvollzogen und zu diesem synchron eine in sich konsistente Datenmenge erfaßt werden kann. Eine derartige Triggerinformation gibt z.B. die Gültigkeit der im Dual-Port-RAM 22 bereitgestellten in sich konsistenten Datenmenge an. Dies bedeutet, daß wenn in irgendeiner der Programmebenen innerhalb des Steuergerätes 10 eine in sich konsistente Datenteilmenge neu berechnet wurde, diese sofort simultan von dem Dual-Port-RAM 22 übernommen werden kann. Die in dem Dual-Port-RAM 22 des Meßsystems 18 gespeicherten Daten werden nunmehr über die Übertragungsstrecke 30 bzw. den Adapter 28 der Schnittstelle 24 des Steuerrechners 26 übertragen. In dem Steuerrechner 26 werden die übertragenen Daten in dem Ringpuffer 32 zwischengespeichert und im Falle des Auftretens eines bestimmten, wählbaren Ereignisses auf die Festplatte 34 übernommen. Bei der Übernahme der Daten auf die Festplatte 34 können intern bestimmte einstellbare Vor- und/oder Nachlaufzeiten berücksichtigt werden, so daß die Entwicklung bis zum Eintritt des Ereignisses nachvollzogen werden kann. Die auf der Festplatte 34 gespeicherten Daten können nunmehr über den Steuerrechner 26 abgefragt werden.

In Figur 2 ist der Datenübergang zwischen dem Arbeitsspeicher 20 und dem Dual-Port-RAM 22 nochmals verdeutlicht. In der dargestellten Situation wird gerade ein bestimmter Bereich 42 des Arbeitsspeichers 20 abgefragt, der beispielsweise eine Größe von 1 kB besitzt. Innerhalb dieses Bereichs 42 werden Daten von beispielsweise drei Programmebenen 44, 46 und 48 abgefragt. Die Programmebenen 44, 46 und 48 können dabei zu unterschiedlichen Zeitpunkten aktualisiert werden, das heißt sie können beispielsweise zündungssynchron oder zeitsynchron oder asynchron sein. Mit den Daten werden gleichzeitig zu jeder Programmebene 44, 46 bzw. 48 zugehörige Triggerinformationen 50, 52 bzw. 54 und eine jeweils zugehörige Datenmenge 56, 58 bzw. 60 übertragen. Während des Dauerbetriebes beobachtet das Meßsystem 18 fortlaufend den Zustand der relevanten Triggerinformationen 50, 52 bzw. 54 im Dual-Port-RAM 22, synchronisiert sich selbst mit den verschiedenen Programmebenen 44, 46 bzw. 48 und erfaßt zyklisch alle erwünschten Datenmengen 56, 58 bzw. 60. Die Datenmengen 56, 58 bzw. 60 werden dabei in der richtigen zeitlichen Reihenfolge aufgezeichnet. Die Triggerinformationen 50, 52 bzw. 54 gestatten es, synchron zu dem Programmablauf innerhalb des Steuergerätes 10, der sich in dem Arbeitsspeicher 20 wiederspiegelt, die in sich konsistenten Datenmengen zu erfassen. Die Datenmengen 56, 58 bzw. 60 können dabei selber wieder bestimmte Triggerinformationen enthalten, die zur Auslösung bestimmter Aktionen in dem Steuerrechner 26 geeignet sind. Eine solche Information soll hier beispielsweise mit einer Fehlertriggerinformation 62 in der Datenmenge 58 angedeutet sein.

Das dargestellte Beispiel mit den drei Programmebenen 44, 46 bzw. 48 ist nur beispielhaft, denn durch Abfragen weiterer Bereiche 42 des Arbeitsspeichers 20 entweder nacheinander oder zugleich kann dieses System auf beliebig viele Programmebenen erweitert werden. Entscheidend für das Verfahren ist, daß eine simultane Erfassung von Daten aus verschiedenen asynchronen Programmebenen eines Steuergerätes 10 mit geringster Beeinflussung der Programmlaufzeit im Steuergerät 10 erfolgt. Insbesondere ist es möglich, daß eine eindeutige Zuordnung der erfaßten Datenmengen 56, 58 bzw. 60 zum tatsächlichen Zeitpunkt ihrer Bereitstellung im Steuergerät 10 erfolgt.

## Patentansprüche

1. Verfahren zum Erfassen von Daten eines elektronischen Steuergeräts, bei dem die Daten (56, 58, 60) des Steuergeräts (10) über eine Schnittstelle (16) in einem Dual-Port-RAM (22) eines Meßsystems (18) gespeichert werden, dadurch gekennzeichnet,
- daß im Steuergerät eine Programm zum Betreiben eine Kraftfahrzeugs mit unterschiedlichen Programmebenen abläuft, wobei mindesten eine Programmebene zündungsynchron und mindestens eine Programmebene zeitsynchron ist,
- daß von dem Steuergerät spezielle Triggerinformationen (50, 52, 54) bereitgestellt werden,
- daß die Triggerinformationen (50, 52, 54) mit den Daten (56, 58, 60) im Dual-Port-RAM (22) gespeichert werden,
- und daß die Triggerinformationen (50, 52, 54) dem Meßsystem eine Zuordnung der Daten (56, 58, 60) zu den unterschiedlichen Programmebenen erlauben.

2. Verfahren nach Anspruch 1, dadurch gekennzeichnet, daß die Daten über eine serielle Schnittstelle (24) einem Steuerrechner (26) zugeführt werden, der die übertragenen Daten zwischenspeichert.

3. Verfahren nach einem der vorhergehenden Ansprüche, dadurch gekennzeichnet, daß die Daten von dem Zwischenspeicher (32) in Abhängigkeit eines wählbaren Ereignisses auf einen Hauptspeicher, insbesondere eine Festplatte (34), kopiert werden.

4. Verfahren nach Anspruch 3, dadurch gekennzeichnet, daß das Ereignis mit einer einstellbaren Vor- und/oder Nachlaufzeit kopiert wird.

5. Verfahren nach einem der vorhergehenden Ansprüche, dadurch gekennzeichnet, daß der Status der Datenerfassung über ein an dem Steuerrechner (26) angeschlossenes Anzeigegerät (38) ausgegeben wird.

## Claims

1. Method for acquiring data from an electronic control unit in which the data (56, 58, 60) of the control unit (10) are stored in a dual port RAM (22) of a measuring system (18) via an interface (16), characterized
- in that a program for operating a motor vehicle with different program levels runs in the control unit, at least one program level being synchronous with the ignition and at least one program level having timed synchronism,
- in that specific trigger information (50, 52, 54) is made available by the control unit,
- in that the trigger information (50, 52, 54) is stored with the data (56, 58, 60) in the dual port RAM (22),
- and in that the trigger information (50, 52, 54) permits data (56, 58, 60) concerning the different program levels to be assigned to the measuring system.

2. Method according to Claim 1, characterized in that the data are fed via a serial interface (24) to a control computer (26) which buffers the transmitted data.

3. Method according to one of the preceding claims, characterized in that the data are copied from the buffer (32) onto a main memory, in particular a hard disk (34), as a function of a selectable event.

4. Method according to Claim 3, characterized in that the event is copied with an adjustable forward travel time and/or overtravel time.

5. Method according to one of the preceding claims, characterized in that the status of the data acquisition is output via a display unit (38) which is connected to the control computer (26).

## Revendications

1. Procédé de saisie de données d'un appareil de données électroniques dans lequel les données (56, 58, 60) de l'appareil de commande (10) sont mises en mémoire dans un double port RAM (22) d'un système de mesure (18) par une interface (16), caractérisé en ce que
- dans l'appareil de commande, on déroule un programme de mise en oeuvre d'un véhicule automobile dans des plans de programme différents, et au moins un plan de programme est synchrone sur l'allumage ou au moins un plan de programme est synchrone dans le temps,
- l'appareil de commande fournit des informations de déclenchement particulières (50, 52, 54),
- les informations de déclenchement (50, 52, 54) avec les données (56, 58, 60) sont enregistrées dans le double port RAM (22),
- et les informations de déclenchement (50, 52, 54) pour le système de mesure permettent une association de données (56, 58, 60) vers les différents plans de programme.

2. Procédé selon la revendication 1,
caractérisé en ce que
les données sont appliquées à un calculateur de commande (26) par une interface série (24), ce calculateur mémorisant de façon intermédiaire les données transmises.

3. Procédé selon l'une des revendications précédentes,
caractérisé en ce que
les données de la mémoire intermédiaire ou mémoire (tampon) (32) sont copiées en fonction d'un événement sélectionné dans une mémoire principale notamment sur un disque dur (34).

4. Procédé selon la revendication 3,
caractérisé en ce que
l'événement est copié avec un temps d'avance et/ou de retard réglable.

5. Procédé selon l'une quelconque des revendications précédentes,
caractérisé en ce que
l'état de la saisie des données est émis par un appareil d'affichage (38) raccordé au calculateur de commande (26).
